# EUROPEAN PATENT SPECIFICATION

(11) **EP 2 674 798 B1**
(45) Date of publication and mention of the grant of the patent: **05.04.2017**
(21) Application number: 12172235.9
(22) Date of filing: 15.06.2012
(51) Int. Cl.: G02B 6/44

(54) **FIBER OPTIC DISTRIBUTION DEVICE**
GLASFASERVERTEILUNGSVORRICHTUNG
DISPOSITIF DE DISTRIBUTION À FIBRE OPTIQUE

(43) Date of publication of application: 18.12.2013
(73) Proprietor: CCS Technology, Inc., Wilmington, DE 19803 (US)
(72) Inventor: Knuth, Thomas, Dr., 10317 Berlin (DE)
(74) Representative: Sturm, Christoph

(56) References cited:
- EP-A1- 2 216 667
- US-A- 5 167 001

## Description

The present patent application relates to a fiber optic distribution device.

When designing data transmission networks comprising optical fibers, it is necessary to connect optical fibers to one another. Such junctions need to be handled both outside buildings and inside buildings. Outside buildings, junctions between optical fibers are accommodated in so called cable sleeves or street cabinets. Inside buildings, junctions between optical fiber are handled in so called distribution cabinets or distribution frames. So called wall boxes are used for the handling of junctions between optical fibers both outside buildings and inside buildings.

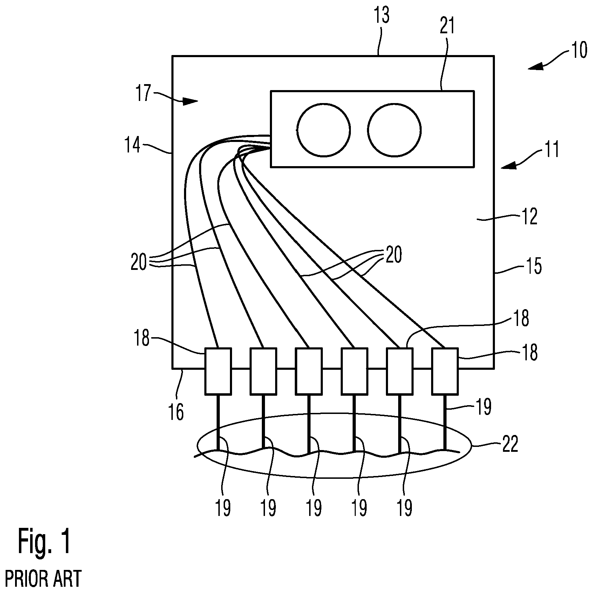

Figure 1 shows a schematic view of a fiber optic distribution device 10 according to the prior art designed as a wall box. The prior art fiber optic distribution device 10 of Figure 1 comprises a housing 11 with a back wall 12, a front wall (not shown) and side walls 13, 14, 15 and 16 defining together an interior 17 of the housing 11. The prior art fiber optic distribution device 10 of Figure 1 further comprises patch elements 18 for establishing patch connections between first optical fibers running in first fiber optic cables 19, especially in drop cables, and second optical fibers running in second fiber optic cables 20, especially in pigtails. The first fiber optic cables 19 are running outside of the housing 11 and the second fiber optic cables 20 are running in the interior 17 of the housing 11, namely between the patch elements 18 and a fiber management system 21. The patch elements 18 are assigned to, namely mounted on, a side wall 16 of the housing.

Such an arrangement of the patch elements 18 at a side wall of the housing 11 requires a wide space for mounting the same. This leads to a large fiber optic distribution device 10 and a wide cable spacing area 22 of the first fiber optic cables 19. This is very often a blocking point due to esthetic reasons. End customers don't want to have such large fiber optic distribution devices 10 with a wide cable spacing area 22 installed.

EP 2 216 667 A1 discloses a fiber optic distribution device having swingable splice trays.

The present application is based on the problem of providing a novel fiber optic distribution device suitable for handling junctions between optical fibers which allows to continue the use of patch elements but further allows to have a smaller cable spacing area. The fiber optic distribution device according to the present application is defined in claim 1.

Another fiber optic distribution device according to the present application is defined in claim 10.

Preferred embodiments of the fiber optic distribution device and fiber optic management unit are given in the dependent claims and the description below. Exemplary embodiments will be explained in more detail with reference to the drawing, in which:
- Figure 1: shows a schematic view of a fiber optic distribution device according to the prior art;
- Figure 2: shows a schematic view of a fiber optic distribution device according to a first embodiment of the invention;
- Figure 3a: shows a first schematic view of a fiber optic distribution device according to a second embodiment of the invention; and
- Figure 3b: shows a second schematic view of a fiber optic distribution device according to the second embodiment of the invention turned by 90° relative to the first schematic view of Figure 3a.

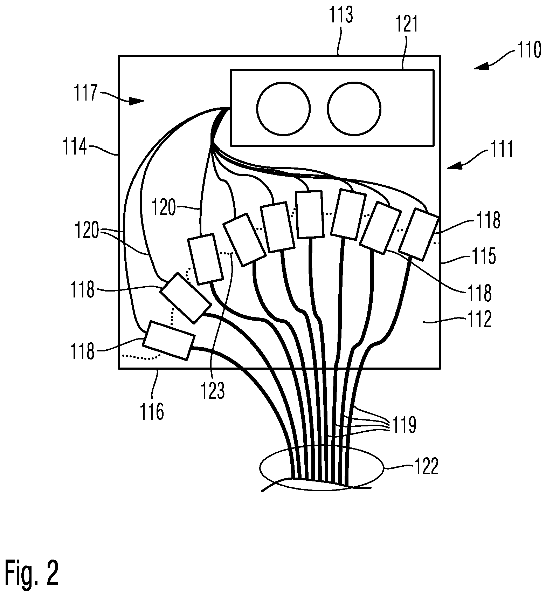

Figure 2 shows a schematic view of a fiber optic distribution device 110 according to a first embodiment of the present invention.

The fiber optic distribution device 110 of Figure 2 comprises a housing 111 with a back wall 112, a front wall (not shown) and side walls 113, 114, 115 and 116 defining together an interior 117 of the housing 111.

The fiber optic distribution device 110 of Figure 2 further comprises patch elements 118 for establishing patch connections between first optical fibers running in first fiber optic cables 119, especially in drop cables, and second optical fibers running in second fiber optic cables 120, especially in pigtails.

The first fiber optic cables 119 are mainly running outside of the housing 111.

The second fiber optic cables 120 are running in the interior 117 of the housing 111, namely between the patch elements 118 and a fiber management system 121.

The patch elements 118 for establishing the patch connections between the first optical fibers and the second optical fibers are flexibly positioned in the interior 117 of the housing 111. It is possible to provide a smaller cable spacing area 122 for a fiber optic distribution device and - if desired - to reduce the size of the fiber optic distribution device.

According to a preferred further development, the patch elements 118 for establishing the patch connections between the first optical fibers and the second optical fibers are positioned on at least one flexible support element 123. In the embodiment of Figure 2, all patch elements 118 for establishing the patch connections between the first optical fibers and the second optical fibers are positioned on one common flexible support element 123. This allows a very easy flexible positioning and handling of the patch elements 118 in order to provide a small cable spacing area 122.

The flexible support element 123 of the embodiment of Figure 2 is provided by a mesh or mat structure. Such a flexible mesh or flexible mat structure is preferred and allows in a very easy way to pull the patch elements 118 out of the housing 111 when patch connections are to be established or changed during installation and further allows in a very easy way to push the patch elements 118 into the housing 111 after installation is finished providing a small cable spacing area 122.

In an operation status of the fiber optic distribution device 110 (see Figure 2), the respective flexible support element 123 is together with the patch elements 118 positioned completely inside the housing 111 within the interior 123 of the same. This provides a small cable spacing area 122 in the operation status of the fiber optic distribution device 110. Further on, the patch elements 118 and patch connections are protected.

In an installation status of the fiber optic distribution device 110, the respective flexible support element 123 is together with at least some of the patch elements 118 positioned at least partially inside the housing 111 within the interior 117 of the same and with at least some of the patch elements 118 positioned partially outside the housing 111. This provides an easy access to the patch elements 118 in the installation status of the fiber optic distribution device 110.

The patch elements 118 are preferably provided by patch adapters mounted to the respective flexible support element 123 and by patch connectors, wherein each patch adapter receives a first patch connector assigned to a first fiber optic cable 119 and a second patch connector assigned to a second fiber optic cable 120.

Alternatively, the patch elements 118 are provided by patch jacks assigned to the second fiber optic cables 120 and are mounted to the respective flexible support element 123, wherein each patch jack receives a patch connector assigned to a first fiber optic cable 119.

Another advantage of the flexible mesh or flexible mat structure is that such a structure protects the inner fiber optic parts from the outdoor environment in the installation status of the fiber optic distribution device 110. For example water and dust can not penetrate through the flexible mesh or flexible mat structure when the first fiber optic cables 119 become connected to or disconnected from the patch elements 118.

It is possible to have more than one flexible support element 123. It is possible to mount a first subset of patch elements 118 on a first flexible support element 123 and a second subset of patch elements 118 on a second flexible support element 123. It is also possible to mount the patch elements 118 on individual flexible support elements 123. However, it is preferred to mount all patch elements 118 on a common flexible support element 123.

The housing 111 of the fiber optic distribution device 110 comprises preferably two separate covers. A first cover allows access to the outward facing part of patch elements 118 only while protecting the inward facing part of patch elements 118 and the fiber management system 121. A second cover allows access to the inward facing part of patch elements 118 and to the fiber management system 121. This allows to have the internal fiber management untouched when the first fiber cables 119 are installed and further improves the protection of the internal fiber management against environmental influences like water and/or dust.

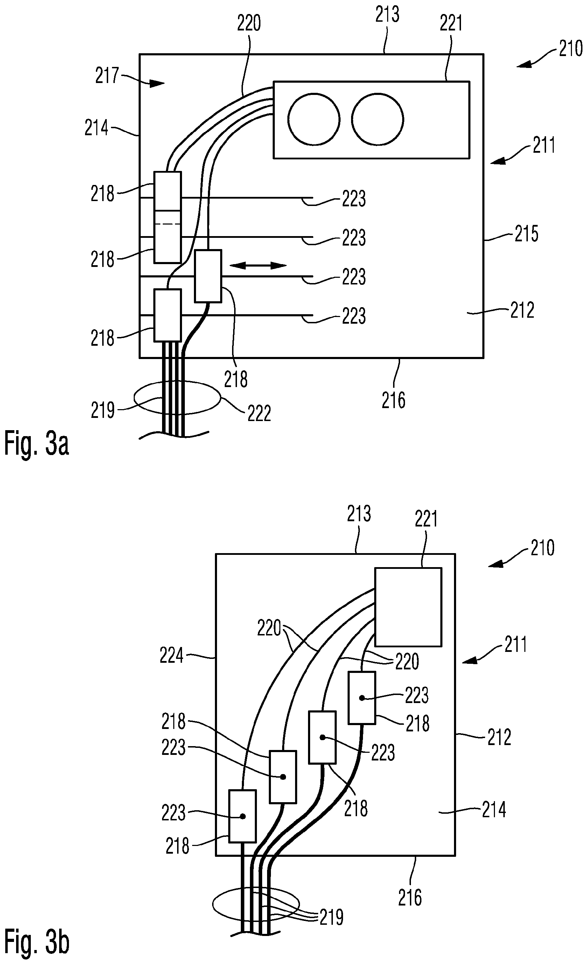

Figures 3a and 3b show a schematic view of a fiber optic distribution device 210 according to a second embodiment of the present invention. The fiber optic distribution device 210 of Figures 3a, 3b comprises a housing 211 with a back wall 212, a front wall 224 and side walls 213, 214, 215 and 216 defining together an interior 217 of the housing 211.

The fiber optic distribution device 210 of Figure 2 further comprises patch elements 218 for establishing patch connections between first optical fibers running in first fiber optic cables 219, especially in drop cables, and second optical fibers running in second fiber optic cables 220, especially in pigtails. The first fiber optic cables 219 are mainly running outside of the housing 211. The second fiber optic cables 220 are running in the interior 217 of the housing 211, namely between the patch elements 218 and a fiber management system 221.

The patch elements 218 for establishing the patch connections between the first optical fibers and the second optical fibers are flexibly positioned in the interior 217 of the housing 211. It is possible to provide a smaller cable spacing area 222 for a fiber optic distribution device and - if desired - to reduce the size of the fiber optic distribution device.

According to a preferred further development, each patch element 218 for establishing the patch connections between the first optical fibers and the second optical fibers is positioned on a flexible or non-flexible support element 223, wherein the mounting location of the patch elements 218 on the respective support element 223 is flexible. In Figures 3a, 3b each patch element 218 is mounted on an individual mounting rod, wherein each patch element 218 is flexibly transferable along the respective mounting rod.

In an operation status of the fiber optic distribution device 210, all patch elements 218 are transferred in a position on the respective support element 223 adjacent to the side wall 214. In an installation status of the fiber optic distribution device 110, each patch element 218 is individually transferable into a position on the respective support element 223 remote from said side wall 214 allowing an easy access to the respective patch element 218.

The patch elements 218 are preferably provided by patch adapters mounted to the respective support element 223 and by patch connectors, wherein each patch adapter receives a first patch connector assigned to a first fiber optic cable 219 and a second patch connector assigned to a second fiber optic cable 220.

Alternatively, the patch elements 218 are provided by patch jacks assigned to the second fiber optic cables 220 and are mounted to the respective flexible support element 223, wherein each patch jack receives a patch connector assigned to a first fiber optic cable 219.

In both embodiments of the present application, the patch elements 118, 218 are not mounted on a side wall of the housing 211, 212 of the respective fiber optic distribution device 110, 210 but on a structure to allow a flexible positioning of the patch elements 118, 218. This allows to put more patch elements 118, 218 inside the fiber optic distribution device 110, 210 since the space inside the fiber optic distribution device 110, 210 is used and not only the side walls anymore. The first fiber optic cables 119, 219 connected to the outward facing part of patch elements 118, 218 can be routed all in one common string in a dense area and will improve the esthetic aspects of the fiber optic distribution device 110, 210 by reducing the size of the cable spacing area 122, 222. The use of bend insensitive fibers in the cables 119, 219, 120, 220 is preferred.

The embodiment of Figure 2 provides the additional advantage that the flexible mesh or flexible mat structure protects the inner fiber optic parts from the outdoor environment in the installation status of the fiber optic distribution device. The embodiment of Figure 2 is therefore preferred.

Each of the patch elements 118, 218 can provide multi-fiber or single fiber patch connections.

### List of reference numerals

- 10: fiber optic distribution device
- 11: housing
- 12: back wall
- 13: side wall
- 14: side wall
- 15: side wall
- 16: side wall
- 17: Interior
- 18: Patch elements
- 19: first fiber optic cable
- 20: second fiber optic cable
- 21: fiber management system
- 22: cable spacing area

- 110: fiber optic distribution device
- 111: housing
- 112: back wall
- 113: side wall
- 114: side wall
- 115: side wall
- 116: side wall
- 117: Interior
- 118: Patch elements
- 119: first fiber optic cable
- 120: second fiber optic cable
- 121: fiber management system
- 122: cable spacing area
- 123: flexible support element

- 210: fiber optic distribution device
- 211: housing
- 212: back wall
- 213: side wall
- 214: side wall
- 215: side wall
- 216: side wall
- 217: Interior
- 218: Patch elements
- 219: first fiber optic cable
- 220: second fiber optic cable
- 221: fiber management system
- 222: cable spacing area
- 223: flexible support element
- 224: front wall

## Claims

1. A fiber optic distribution device, especially wall box, comprising a housing (111) with a back wall (112), a front wall and side walls (113, 114, 115, 116) defining together an interior (117) of the housing (111), and further comprising patch elements (118) for establishing patch connections between first optical fibers running in first fiber optic cables (119; 219) and second optical fibers running in second fiber optic cables (120) **characterized in that** the patch elements (118) for establishing the patch connections between the first optical fibers and the second optical fibers are flexibly positioned in the interior (117) of the housing (111), namely in such a way that the patch elements (118) for establishing the patch connections between the first optical fibers and the second optical fibers are positioned on at least one flexible support element (123).

2. The fiber optic distribution device of claim 1, **characterized in that** the or each flexible support element (123) is provided by a mesh-like structure.

3. The fiber optic distribution device of claim 1, **characterized in that** the or each flexible support element (123) is provided by a mat-like structure.

4. The fiber optic distribution device of one of claims 1-3, **characterized in that** in an operation status of the fiber optic distribution device the respective flexible support element (123) together with the patch elements (118) is positioned completely inside the housing (111) within the interior (117) of the same.

5. The fiber optic distribution device of one of claims 1-4, **characterized in that** in an installation status of the fiber optic distribution device the respective flexible support element (123) together with at least some of the patch elements (118) is positioned at least partially outside the housing (111).

6. The fiber optic distribution device of claim 5, **characterized in that** in the installation status of the fiber optic distribution device the respective flexible support element (123) together with at least some of the patch elements (118) is positioned partially inside the housing (111) within the interior (117) of the same.

7. The fiber optic distribution device of one of claims 1-6, **characterized in that** the patch elements (118) are provided by patch adapters mounted to the respective flexible support element (123) and by patch connectors, wherein each patch adapter receives a first patch connector assigned to a first fiber optic cable and a second patch connector assigned to a second fiber optic cable.

8. The fiber optic distribution device of one of claims 1-6, **characterized in that** the patch elements (118) are provided by patch jacks assigned to the second fiber optic cables and being mounted to the respective flexible support element (123), wherein each patch jack receives a patch connector assigned to a first fiber optic cable.

9. The fiber optic distribution device of one of claims 1-8, **characterized in that** all patch elements (118) for establishing the patch connections between the first optical fibers and the second optical fibers are positioned on one common flexible support element (123).

10. A fiber optic distribution device, especially wall box, comprising a housing (211) with a back wall (212), a front wall (224) and side walls (213, 214, 215, 216) defining together an interior (217) of the housing (211), and further comprising patch elements (218) for establishing patch connections between first optical fibers running in first fiber optic cables (219) and second optical fibers running in second fiber optic cables (220) **characterized in that** the patch elements (218) for establishing the patch connections between the first optical fibers and the second optical fibers are flexibly positioned in the interior (217) of the housing (211), namely in such a way that the patch elements (218) for establishing the patch connections between the first optical fibers and the second optical fibers are positioned on at least one support element (223), wherein the mounting location of the patch elements (218) on the respective support element (223) is flexible.

11. The fiber optic distribution device of claim 10, **characterized in that** the or each support element (223) is provided by a mounting rod, wherein each patch element (218) is transferable along the mounting rod.

12. The fiber optic distribution device of claim 10 or 11, **characterized in that** each patch element (218) is positioned on an individual support element (223).

## Patentansprüche

1. Glasfaserverteilungsvorrichtung, insbesondere Wandbox, die ein Gehäuse (111) mit einer Rückwand (112), einer Vorderwand und Seitenwänden (113, 114, 115, 116) umfasst, welche zusammen einen Innenraum (117) des Gehäuses (111) begrenzen, und ferner Patch-Elemente (118) zum Herstellen von Patch-Verbindungen zwischen ersten Glasfasern, die in ersten Glasfaserkabeln (119; 219) verlaufen, und zweiten Glasfasern, die in zweiten Glasfaserkabeln (120) verlaufen, umfasst, **dadurch gekennzeichnet, dass** die Patch-Elemente (118) zum Herstellen der Patch-Verbindungen zwischen den ersten Glasfasern und den zweiten Glasfasern flexibel in dem Innenraum (117) des Gehäuses (111) positioniert sind, nämlich auf eine solche Weise, dass die Patch-Elemente (118) zum Herstellen der Patch-Verbindungen zwischen den ersten Glasfasern und den zweiten Glasfasern auf mindestens einem flexiblen Halteelement (123) positioniert sind.

2. Glasfaserverteilungsvorrichtung nach Anspruch 1, **dadurch gekennzeichnet, dass** das oder jedes flexible Halteelement (123) von einer netzartigen Struktur gebildet ist.

3. Glasfaserverteilungsvorrichtung nach Anspruch 1, **dadurch gekennzeichnet, dass** das oder jedes flexible Halteelement (123) von einer mattenartigen Struktur gebildet ist.

4. Glasfaserverteilungsvorrichtung nach einem der Ansprüche 1-3, **dadurch gekennzeichnet, dass** in einem Betriebszustand der Glasfaserverteilungsvorrichtung das jeweilige flexible Halteelement (123) zusammen mit den Patch-Elementen (118) vollständig innerhalb des Gehäuses (111) im Innenraum (117) desselben positioniert ist.

5. Glasfaserverteilungsvorrichtung nach einem der Ansprüche 1-4, **dadurch gekennzeichnet, dass** in einem Installationszustand der Glasfaserverteilungsvorrichtung das jeweilige flexible Halteelement (123) zusammen mit zumindest einigen der Patch-Elemente (118) zumindest teilweise außerhalb des Gehäuses (111) positioniert ist.

6. Glasfaserverteilungsvorrichtung nach Anspruch 5, **dadurch gekennzeichnet, dass** im Installationszustand der Glasfaserverteilungsvorrichtung das jeweilige flexible Halteelement (123) zusammen mit zumindest einigen der Patch-Elemente (118) teilweise innerhalb des Gehäuses (111) im Innenraum (117) desselben positioniert ist.

7. Glasfaserverteilungsvorrichtung nach einem der Ansprüche 1-6, **dadurch gekennzeichnet, dass** die Patch-Elemente (118) von Patch-Adaptern, die an dem jeweiligen flexiblen Halteelement (123) montiert sind, und von Patch-Verbindungsteilen gebildet sind, wobei jeder Patch-Adapter ein erstes Patch-Verbindungsteil, das einem ersten Glasfaserkabel zugewiesen ist, und ein zweites Patch-Verbindungsteil, das einem zweiten Glasfaserkabel zugewiesen ist, aufnimmt.

8. Glasfaserverteilungsvorrichtung nach einem der Ansprüche 1-6, **dadurch gekennzeichnet, dass** die Patch-Elemente (118) von Patch-Steckbuchsen, die den zweiten Glasfaserkabeln zugewiesen sind und an dem jeweiligen flexiblen Halteelement (123) montiert sind, gebildet sind, wobei jede Patch-Steckbuchse ein Patch-Verbindungsteil, das einem ersten Glasfaserkabel zugewiesen ist, aufnimmt.

9. Glasfaserverteilungsvorrichtung nach einem der Ansprüche 1-8, **dadurch gekennzeichnet, dass** sämtliche Patch-Elemente (118) zum Herstellen der Patch-Verbindungen zwischen den ersten Glasfaserkabeln und den zweiten Glasfaserkabeln auf einem gemeinsamen Halteelement (123) positioniert sind.

10. Glasfaserverteilungsvorrichtung, insbesondere Wandbox, die ein Gehäuse (211) mit einer Rückwand (212), einer Vorderwand (224) und Seitenwänden (213, 214, 215, 216) umfasst, welche zusammen einen Innenraum (217) des Gehäuses (211) begrenzen, und ferner Patch-Elemente (218) zum Herstellen von Patch-Verbindungen zwischen ersten Glasfasern, die in ersten Glasfaserkabeln (219) verlaufen, und zweiten Glasfasern, die in zweiten Glasfaserkabeln (220) verlaufen, umfasst, **dadurch gekennzeichnet, dass** die Patch-Elemente (218) zum Herstellen der Patch-Verbindungen zwischen den ersten Glasfasern und den zweiten Glasfasern flexibel in dem Innenraum (217) des Gehäuses (211) positioniert sind, nämlich auf eine solche Weise, dass die Patch-Elemente (218) zum Herstellen der Patch-Verbindungen zwischen den ersten Glasfasern und den zweiten Glasfasern auf mindestens einem Halteelement (223) positioniert sind, wobei der Montageort der Patch-Elemente (218) auf dem jeweiligen Halteelement (223) flexibel ist.

11. Glasfaserverteilungsvorrichtung nach Anspruch 10, **dadurch gekennzeichnet, dass** das oder jedes Halteelement (223) durch einen Montagestab bereitgestellt ist, wobei jedes Patch-Element (218) entlang des Montagestabs versetzbar ist.

12. Glasfaserverteilungsvorrichtung nach Anspruch 10 oder 11, **dadurch gekennzeichnet, dass** jedes Patch-Element (218) auf einem individuellen Halteelement (223) positioniert ist.

## Revendications

1. Dispositif de distribution de fibres optiques, plus particulièrement coffret mural, comprenant un boîtier (111) doté d'une paroi arrière (112), d'une paroi avant et de parois latérales (113, 114, 115, 116) définissant conjointement une partie intérieure (117) du boîtier (111), et comprenant en outre des éléments de raccordement (118) servant à établir des liaisons de raccordement entre des premières fibres optiques qui courent dans des premiers câbles à fibres optiques (119 ; 219) et des deuxièmes fibres optiques qui courent dans des deuxièmes câbles à fibres optiques (120), **caractérisé en ce que** les éléments de raccordement (118) servant à établir les liaisons de raccordement entre les premières fibres optiques et les deuxièmes fibres optiques sont disposés de manière flexible dans la partie intérieure (117) du boîtier (111), à savoir de sorte à disposer sur au moins un élément support flexible (123) les éléments de raccordement (118) servant à établir les liaisons de raccordement entre les premières fibres optiques et les deuxièmes fibres optiques.

2. Dispositif de distribution de fibres optiques selon la revendication 1, **caractérisé en ce que** le ou chaque élément support flexible (123) est procuré par une structure de type maille.

3. Dispositif de distribution de fibres optiques selon la revendication 1, **caractérisé en ce que** le ou chaque élément support flexible (123) est procuré par une structure de type natte.

4. Dispositif de distribution de fibres optiques selon l'une des revendications 1 à 3, **caractérisé en ce que**, dans un état de fonctionnement du dispositif de distribution de fibres optiques, l'élément support flexible respectif (123) ainsi que les éléments de raccordement (118) sont disposés entièrement à l'intérieur du boîtier (111) dans sa partie intérieure (117).

5. Dispositif de distribution de fibres optiques selon l'une des revendications 1 à 4, **caractérisé en ce que**, dans un état d'installation du dispositif de distribution de fibres optiques, l'élément support flexible respectif (123) ainsi que certains au moins des éléments de raccordement (118) sont disposés au moins partiellement en dehors du boîtier (111).

6. Dispositif de distribution de fibres optiques selon la revendication 5, **caractérisé en ce que**, dans l'état d'installation du dispositif de distribution de fibres optiques, l'élément support flexible respectif (123) ainsi que certains au moins des éléments de raccordement (118) sont disposés en partie à l'intérieur du boîtier (111) dans sa partie intérieure (117).

7. Dispositif de distribution de fibres optiques selon l'une des revendications 1 à 6, **caractérisé en ce que** les éléments de raccordement (118) sont procurés par des adaptateurs de raccordement montés sur l'élément support flexible respectif (123) et par des connecteurs de raccordement, chaque adaptateur de raccordement recevant un premier connecteur de raccordement assigné à un premier câble à fibres optiques et un deuxième connecteur de raccordement assigné à un deuxième câble à fibres optiques.

8. Dispositif de distribution de fibres optiques selon l'une des revendications 1 à 6, **caractérisé en ce que** les éléments de raccordement (118) sont procurés par des jacks de raccordement assignés aux deuxièmes câbles à fibres optiques et montés sur l'élément support flexible respectif (123), chaque jack de raccordement recevant un connecteur de raccordement assigné à un premier câble à fibres optiques.

9. Dispositif de distribution de fibres optiques selon l'une des revendications 1 à 8, **caractérisé en ce que** tous les éléments de raccordement (118) servant à établir les liaisons de raccordement entre les premières fibres optiques et les deuxièmes fibres optiques sont disposés sur un élément support flexible commun (123).

10. Dispositif de distribution de fibres optiques, plus particulièrement coffret mural, comprenant un boîtier (211) doté d'une paroi arrière (212), d'une paroi avant (224) et de parois latérales (213, 214, 215, 216) définissant conjointement une partie intérieure (217) du boîtier (211), et comprenant en outre des éléments de raccordement (218) servant à établir des liaisons de raccordement entre des premières fibres optiques qui courent dans des premiers câbles à fibres optiques (219) et des deuxièmes fibres optiques qui courent dans des deuxièmes câbles à fibres optiques (220), **caractérisé en ce que** les éléments de raccordement (218) servant à établir les liaisons de raccordement entre les premières fibres optiques et les deuxièmes fibres optiques sont disposés de manière flexible dans la partie intérieure (217) du boîtier (211), à savoir de sorte à disposer sur au moins un élément support (223) les éléments de raccordement (218) servant à établir les liaisons de raccordement entre les premières fibres optiques et les deuxièmes fibres optiques, l'emplacement de montage des éléments de raccordement (218) sur l'élément support respectif (223) étant flexible.

11. Dispositif de distribution de fibres optiques selon la revendication 10, **caractérisé en ce que** le ou chaque élément support flexible (223) est procuré par une tige de montage, chaque élément de raccordement (218) étant transférable le long de la tige de montage.

12. Dispositif de distribution de fibres optiques selon la revendication 10 ou 11, **caractérisé en ce que** chaque élément de raccordement (218) est disposé sur un élément support individuel (223).
